(19) **Europäisches Patentamt**
**European Patent Office**
**Office européen des brevets**

(11) **EP 2 850 254 B1**

(12) **EUROPEAN PATENT SPECIFICATION**

(45) Date of publication and mention
of the grant of the patent:
**23.10.2019 Bulletin 2019/43**

(51) Int Cl.:
***E04B 1/80*** *(2006.01)*      ***E04B 1/78*** *(2006.01)*
***E04B 1/74*** *(2006.01)*

(21) Application number: **13718602.9**

(86) International application number:
**PCT/FI2013/050336**

(22) Date of filing: **26.03.2013**

(87) International publication number:
**WO 2013/144444 (03.10.2013 Gazette 2013/40)**

(54) **INSULATING COMPOSITE PRODUCT COMPRISING MINERAL WOOL AND MATERIAL WITH SUPERIOR INSULATING PROPERTIES**

ISOLIERENDES VERBUNDPRODUKT AUS MINERALWOLLE UND MATERIAL MIT ÜBERLEGENEN ISOLIEREIGENSCHAFTEN

PRODUIT COMPOSITE ISOLANT COMPRENANT UNE LAINE MINÉRALE ET UN MATÉRIAU AYANT DES PROPRIÉTÉS ISOLANTES SUPÉRIEURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2012 FI 20125348**

(43) Date of publication of application:
**25.03.2015 Bulletin 2015/13**

(73) Proprietor: **Paroc Group Oy**
**00180 Helsinki (FI)**

(72) Inventors:
• **SUNDBERG, Pia**
**FI-20540 Turku (FI)**
• **PETTERSSON, Charlotte**
**FI-20880 Turku (FI)**

(74) Representative: **LEITZINGER OY**
**Tammasaarenkatu 1**
**00180 Helsinki (FI)**

(56) References cited:
**EP-A1- 0 022 581      EP-A2- 1 707 349**

## Description

### Technical field

The present invention relates to insulating composite products with excellent insulating properties. More precisely the insulating product according to the present invention is a composite product comprising mineral wool as a first component and a material with superior insulating properties as a second component. A cell structure, comprising a top, a bottom and four outer edges (i.e. a frame), is formed from the mineral wool component and the second component in situated within the cell(s). The second component is aerogel. In case of two or more cells, the cell structure comprises also partition(s) between the cells.

### Background of the invention

Acceleration of climate change and rise in prices of energy increases challenges of improving energy efficiency in buildings. The best kind of efficiency in respect of insulation is the energy that is not used. To reach this target better insulation materials have to be developed. It is although not enough that the insulation materials have excellent insulation properties. From the point of view of installation insulation products should be easy to handle, as light as possible and usually flexible at least in case of normal building insulation. Also requirements for mechanical strength have to be fulfilled. Different kinds of insulation materials with different properties are known from the prior art; one is mechanically strength and flexible, but not light; one is light but difficult to handle; one has excellent insulation properties but is brittle and so on. The combination of different insulation materials is thus one way to obtain an optimal insulation product showing the desired properties of each component.

Mineral wool has been manufactured for a good 100 years. Its general properties and above all its insulating capacity have made it into a standard material with almost innumerable fields of application. From an economical and from the users point of view the insulating capacity is undoubtedly the most essential property. Despite the good properties there is however a need for improving insulation capacity of the mineral wool products.

Aerogel seems to be one answer to that need. Aerogel is a low-density, solid-state material with extremely efficient thermal insulation properties. When considering the utilization of aerogel as building insulation material its property known as friability causes major problems in that respect. Also properties like dustiness, poor mechanical stability, brittleness, non-flexibility and fragility narrow the applicability of aerogel in the field of insulation. Thus, it is almost necessary to combine aerogel with another material having the "missing" properties to obtain a feasible insulation material. The composite products comprising aerogel material are known from the prior art and are disclosed in several patent publications like US 6,316,092; US 2006/0125158; US 6,143,400, US 5,786,059; US 2,893,962; US 7,078,359 and US 2007/173157. The prior art aerogel composite products are typically hard and rigid, i.e. non-flexible and thus difficult to handle and install. The known aerogel composite products are generally formed from a mixed combination of a fibrous material and aerogel material.

Vacuum insulated panels (VIPs) comprising membrane walls and a rigid core have also a very high thermal resistance per unit thickness. The highly porous material of the rigid core may be e.g. fumed silica, aerogel or glass fiber. Typically the overall value of the thermal conductivity ($\lambda$) of the commercially available VIPs varies between 0.006 - 0.008 W/ (m·K). In case the membrane wall(s) is/are broken and the vacuum is lost, the thermal conductivity increases and is about 0.02 W/ (m·K).

EP 1707349 A2 discloses a composite element comprising mineral wool and at least partially evacuated porous layer in an airtight sheath. EP 0022581 A1 discloses a heat-insulating structure with a porous envelope made of sack-like sheath, which encloses a fine powder, such as silica aerogel, which is pressed to form a heat-insulating body.

Fumed silica or pyrogenic silica has an extremely low bulk density and high surface area. Hydrophobic fumed silica can also be used as an insulating material with superior insulating properties. Precipitated silica is produced by precipitation. It is a porous material and the thermal conductivity ($\lambda$) of the silicas (fumed and precipitated) can vary between 0.018 - 0.025 W/ (m·K). Both silicas are typically used in powder form, which causes problems like dustiness.

The object of the present invention is to provide a composite insulation product comprising mineral wool and a material with superior insulating properties (in particular aerogel), which composite product has an excellent lambda value and improved handling properties. The composite product of the present invention comprises a cell structure i.e. support structure of mineral wool and material with superior insulating properties within the cells. In the concept of the present invention the cell structure comprises a bottom and a top and four outer side edges. The composite product comprises two or more cells, the cells are separated from each other with partition(s) between the cells and the product has four outer side edges. Thus the mineral wool and the material with superior insulating properties are as separate components in the composite product, enabling to increase the amount of the second component within the product.

# EP 2 850 254 B1

## Summary of the invention

The present invention concerns an insulating composite product comprising mineral wool and a material with superior insulating property, wherein a cell structure is formed from the mineral wool and the material with superior insulating property is located within said cell structure of the mineral wool. The material with superior insulating property is aerogel and the superior insulating property is obtained by pouring aerogel granules in the cell structure. The cell structure comprises a bottom, a top and four outer side edges.

The composite product is in the form of a slab and the cell structure comprises two or more cells, which are separated from each other by partition(s).

According to still a further embodiment the composite product is in the form of a slab and the cell structure comprises eight cells.

According to the present invention the material with superior insulating property has a thermal conductivity of 0.025 W/ (m·K) or less and it is aerogel.

According to the present invention the height of the insulating composite product is between 20 mm and 300 mm and it is either in a form of a composite slab or a composite mat. The height of the composite slab can vary between 20 - 300 mm and the height of the composite mat is between 20 mm and 60 mm.

## Brief description of the figures

Fig. 1      A schematic top view of the cross-section of the composite slab according to the present invention with eight cells

Fig. 2      A schematic upper side view of the composite slab (without top layer) according to the invention with six cells

Fig. 2a     A schematic upper side view of the composite slab according to one embodiment of the invention, wherein the top layer is not yet placed and is integrally connected to the frame

Fig. 2b     A schematic exploded upper side view of the composite slab according to another embodiment of the invention, wherein the top layer, the bottom layer and the frame are separate sections

Fig.3a      A schematic top view of another embodiment not falling under the scope of the present invention, wherein the cells are formed by seaming top and bottom layers together between the piles or areas of the second component

Fig. 3b     A schematic upper side view of the composite mat according to Fig. 3a showing the placing of the top layer onto the bottom layer

## Detailed description of the invention

The insulating composite product according to the present invention comprises mineral wool as a first component and a material with superior insulating property as a second component. The second component is aerogel. The first component constitutes the support structure i.e. the cell structure of the composite product. The support structure comprises a bottom (4) and a top (5) layer as well as four outer side edges i.e. the frame (1). The composite product comprises two or more cells (3), the cells are separated from each other with (framework) partitions (2), which are thus part of the support structure. The second component, a material with superior insulating property (6), is placed within the cell(s) (3) of the support structure.

In the concept of the present invention, stone wool can be used as the first component.

Thus the cell structure, a bottom (4) and a top (5) layer, a frame (1) and partitions (2), can be formed from stone wool. Stone wool is made from natural stone using small amount of binder in the production process, thus, minimizing the amount of organic material in the end product. Stone wool products are non-combustible and can be used in all types of buildings without restrictions. Due to the porous fiber structure and high density of stone wool, it has also excellent sound insulation properties. Stone wool is chemically robust material with a strong resistance to organic oils, solvents and alkalis and it does not expand or shrink even in case of dramatic changes in temperature or humidity. Stone wool does not absorb or accumulate moisture capillary ensuring rapid evaporation in regular structures.

When preparing the composite product of the present invention, the mineral wool component is preferably used in the form of an uncured mineral wool mat, which may be formed of one or several layers. The density of the uncured mineral wool mat can vary between 50 - 60 kg/m$^3$. Thickness of the uncured mineral wool mat to be used is determined and selected suitably to obtain a composite end product in which the thickness of the components of the cell structure (e.g. top and bottom layers, partitions and side edges) is in the range of 5 -50 mm. The person skilled in the art can easily determine the thickness of the uncured mineral wool mat based on the density of the mineral wool material, taking into account the curing conditions like temperature and compression applied on the product before and during the curing

3

step.

The second component or material with enhanced insulating properties (6), i.e. aerogel, has superior insulating properties, preferably the second component has a thermal conductivity of 0.025 W/ (m·K) or less, typically in the range of 0.006 - 0.025 W/ (m·K). A binder may be used to improve handling and to minimize dusting. A person skilled in the art can easily evaluate if binder is needed as well as the quality and quantity of the binder. The binder may be e.g. in the form of liquid, paste or powder and it can be applied to the second component (aerogel) with various techniques, e.g. by spraying, mixing or blending.

Aerogels are obtained by drying organic or inorganic gels, i.e. the liquid component of the gel is replaced with air. Inorganic aerogels can be used as the second component of the composite product according to the present invention. Inorganic aerogels are mainly composed of metal oxides or mixture of metal oxides and silica-based materials.

The aerogel component suitable for the present composite product is in granular form. Typically the granules suitable for the present composite product have a diameter of 0.005 mm - 4 mm, preferably the diameter of the granules is in the range of 1 - 4 mm.

The composite insulating product according to the present invention is a slab type insulating product. The composite slabs are manufactured off line with different sizes. In an alternative, not falling under the scope of the present invention, the insulating product can be in the form of a mat. The composite mats can be manufactured on line with different widths. Also the offline production of the mat composite product is possible.

The size of the support or cell structure of the present composite slab product is defined with reference to the size of the cell (3) or cells present and to the thickness of the outer side edges (1) and partition(s) (2) in the end product. In principal the size of the cell is determined by its side length; width ($w_{cell}$) and length ($l_{cell}$) and height ($h_{cell}$). In case of the composite slab the height of the cell is determined by the height of the frame (1) and the partitions (2) (where present). The height of the frame equals with the height of the center part of the cell and the height of the frame is essentially the same as the height of the partition(s) in one composite product. The height of the composite product (H) is obtained by summarizing the height of the cell ($h_{cell}$) and the thickness of the bottom layer ($t_{bottom}$) and the thickness of the top layer ($t_{top}$); see equation (1).

$$H = (h_{cell}) + (t_{bottom}) + (t_{top}) \qquad (1)$$

H          height of the composite product
($h_{cell}$)      height of the cell
($t_{bottom}$)    thickness of the bottom layer
($t_{top}$)      thickness of the top layer

The height of the cell(s) can vary from 10 mm to 270 mm. The height of the cells depends on the second component in question and on the end use of the composite product. The thickness of the outer side edges (1), top (5) and bottom (4) layers and the partitions (2) (if present) is between 5 and 50 mm, preferably it is 5 - 15 mm. The side length of each cell is between 100 and 400 mm, preferably it is 200 - 300 mm. The size of the cell(s) and the thickness of the outer edges and partitions depend on the size and thickness of the composite end product and on the density of the mineral wool raw material. The higher is the density of the mineral wool raw material the thinner can be the edges and partitions formed thereof. And the bigger especially the higher is the composite end product the more support is required and thus the thicker is the mineral wool material used in the support structure.

The composite product is manufactured off-line and the size of the end product is determined by its width (W), length (L) and height (H). The size of the composite slab can vary. Typically the size of the composite slab is 600 x 600 mm or 600 x 1200 mm (W x L). The height of the composite slab (H) can vary from 20 mm to 300 mm. The number on cells in the composite slab according to the present invention can vary between 1 - 72. Typically, the number of the cells is between 1 - 10. The composite slab can comprise e.g. four or six or eight cells. It is also possible that the composite slab according to the present invention comprises only one cell.

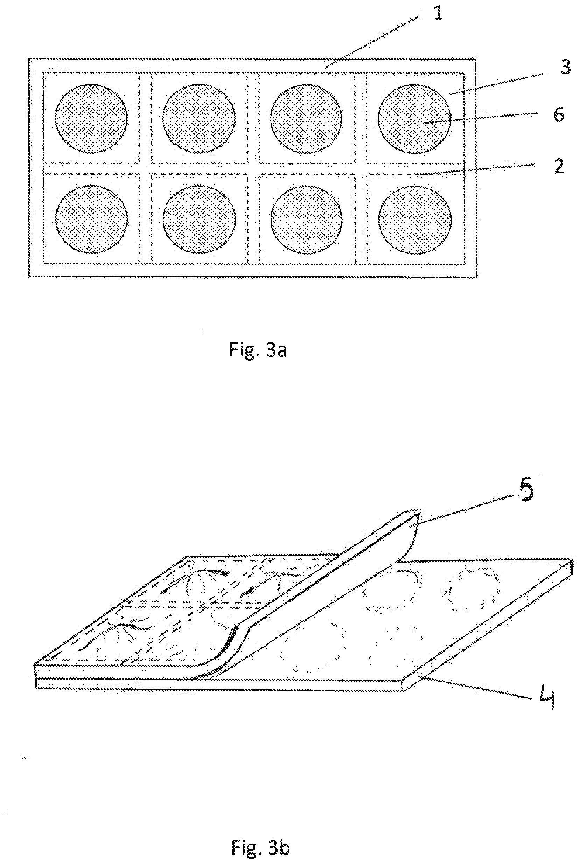

In the case of a composite mat the side edges and partitions are formed by pressing and gluing the bottom and top uncured mineral wool mats together (see Figures 3a and 3b). The second component is added on the bottom slab i.e. on the uncured mineral wool mat as e.g. small piles or panels, which are subsequently covered with the top uncured mineral wool mat. The bottom and top mats are pressed (with continuous seams) together between the cells containing the second component, so that the second component is not damaged.

The height of the cell ($h_{cell}$) in the composite mat product is determined by the height of the second component in the cell, in the approximate center of the cell (the highest point). Also in this case the height of the composite mat product (H) is calculated by using equation (1), although the height or total thickness of the composite mat is not constant over the product. The height of the composite mat product (H) or the thickness of the composite mat is given as the value measured in the approximate center of the cells, not the value obtained from the point of the seams.

This composite product can be manufactured on-line and thus the width of the product can be adjusted suitably. The width of the composite mat can vary, but typically the maximum width is four meters. The number of the cells in the width (or cross) direction depends on the width of composite mat and on the width of the cells. The number of the cells in the cross direction is determined case by case.

It is clear that in case of the composite mat product the number of the cells in the machine direction is not limited to some specific number. The height of the composite mat product (H) is typically less than 60 mm, between 20 - 60 mm.

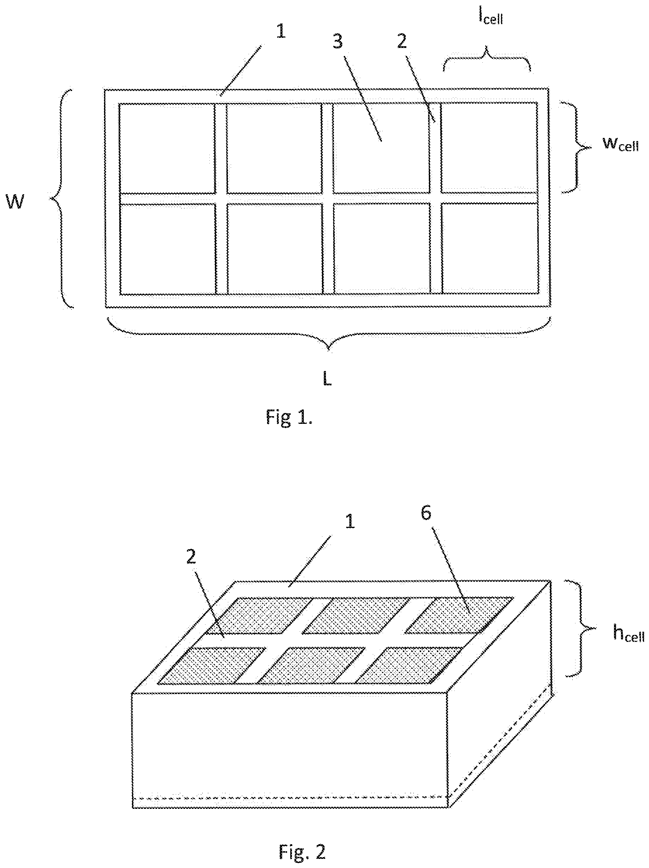

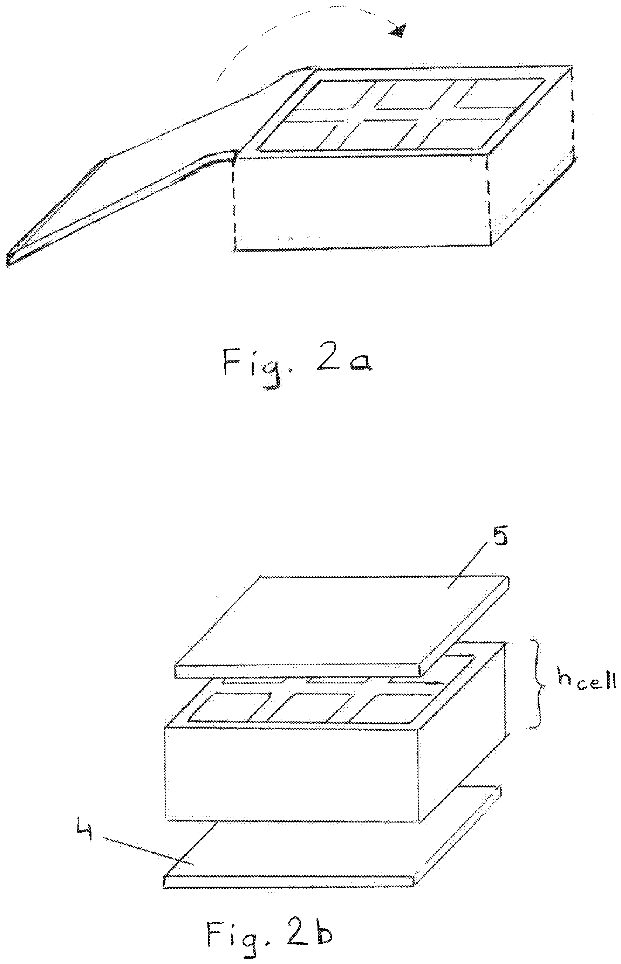

The composite insulating slab according to the present invention is manufactured off line. It is possible to manufacture the top and the bottom as well as the outer edges of the slab from a single uncured mineral wool mat (Fig. 2a). On the other hand the bottom, the top and the frame can be separate components (Fig. 2b).

According to a preferred embodiment of the present invention, a single uncured mineral wool mat (Fig. 2a) is used in the production of the composite slab, first a mat with suitable size is provided. The size of the mat depends on the size of the end product in question. Then the uncured mineral wool mat is cut to a shape from which the bottom and top layers as well as the four outer edges of the slab can be formed. The shape and dimensions of the starting mat depend on the size of the end product. It is important that the size of the starting mat is such that some overlapping of the borders is possible in order to obtain secure seams. The uncured mineral wool mat having the specified shape is then typically placed in a mould with a suitable size. Depending on the size of the slab a partition or a set of partitions (e.g. lattice) is set in the mould. After that the second component is placed within the cell(s); e.g. aerogel granules (and binder if needed) are poured into the cell or cells. Then the top layer is set in its place and the product is compressed to its final shape and to get the extra air pockets off. One must be careful not to damage the second component e.g. aerogel inside the cell(s). The composite slab in its mould is cured in a curing oven at a temperature of 140 - 250°C for a required time. Some compression is applied to the product also during the actual curing step. It is also possible to use microwave curing.

When manufacturing the composite slab from separate components (Fig. 2b) (top, bottom and frame) the frame is first placed on the bottom uncured mineral wool mat. Then the partition or a set of partitions (e.g. lattice) is placed within the frame (if needed). The partition may be of cured mineral wool, but preferably it is still in uncured form at this point. The second component is placed within the cell(s), after which the top layer is set in its place. Then the product is compressed to its final shape and to get the extra air pockets off. One must be careful not to damage the second component e.g. aerogel inside the cell(s). In the next step the composite slab is cured under compression.

In the slab composite product some overlapping in the border areas of the support structure is required in order to obtain secure seams. For example when using separate components (Fig. 2b) the borders of the top and bottom layers can be turned on top of the frame. The amount of overlapping depends on several factors and can easily be determined by the skilled person. The overlapping is required along the whole length of all the seams. Typically 30 - 300 mm of the borders of the components is overlapping. These values and definitions apply also for the above "single uncured mineral wool mat" case.

In case of a composite mat, the mat can be manufactured on-line and the width of the composite mat can be adjusted suitably. The mat product can also be manufactured off-line if desired. The second component is placed on top of the bottom uncured mineral wool mat. In case the second component is aerogel granules they are supplied from the nozzles to form piles of aerogel with an adequate distance between the piles. On the other hand, it is possible that suitable depressions (potholes) are pressed in upper side of the bottom uncured mineral wool mat, into which potholes the second component, aerogel, is placed. The cell structure in the mat product is achieved by pressing the bottom and top layers together between the areas of the second component. Also in the case of mat composite product some compression is applied on the product before and during the curing step to obtain the final shape (thickness) of the product and to get the air pockets off. The compression of the mat product has to be applied carefully not to damage the second component within the cells. It is to be noted that after the compression the density of the mineral wool component is higher in the cell areas than in the areas of the support structure.

As was disclosed above some binder may be used during the manufacturing process in case the second component is aerogel.

## Examples

A composite slab according to the present invention comprising stone wool as a first component and aerogel as a second component was prepared. First an appropriate piece of uncured stone wool was inserted in a Teflon frame to form the bottom and the outer side edges of the composite slab. In this example the composite slab was prepared from a single uncured stone wool mat (Fig. 2a), thus said appropriate piece of uncured stone wool included also the top layer. According to this example the composite slab consisted of one cell, which was then filled with aerogel granules ($\lambda$ = 0.019 W/mK and granule size = 0.01 - 4 mm); no binder was used. After filling, the uncured stone wool was folded over the core i.e. the cell to form the top layer. The composite slab was cured in a microwave curing oven. The slab was cured for five minutes in the microwave oven. The temperature of the composite slab at the end of curing was 145 °C. The temperature was measured with a thermal couple from the inside of the stone wool part of the slab. The top and bottom layers as well as the outer side edges of the composite slab were straightened and made even by sawing before the thermal conductivity (lambda) measurement. The thickness of the top and bottom layers as well as of the outer edges was approximately 15mm ±2mm during the measurement.

As a comparative example a stone wool slab with the same density of the stone wool as was used in the composite slab is disclosed.

Table 1.

|  | Composite slab | Comparative I |
|---|---|---|
| Width of the slab (W) | 610 mm |  |
| Length of the slab (L) | 610 mm |  |
| Height of the slab (H) | 115 mm | 115 mm |
| Weight of the slab | 3310 g |  |
| Weight of the aerogel in the slab | 2100 g |  |
| Thickness of the bottom and top layers (mm) | 15±2 |  |
| Density of the stone wool (kg/m$^3$) | 77 | 77 |
| Total λ (W/m·K) | 0.022 | 0.032 |

As can be seen from Table 1 the composite slab according to the present invention has an excellent insulating capacity.

The composite product according to the present invention, comprising mineral wool as a first component and aerogel as a second component, is flexible which facilitates installation. According to the present invention the second component is "enclosed" within the cell(s) of the composite product, thus the dustiness problem associated with aerogel is overcome as the second component is covered with protective mineral wool layer. In addition to the improved handling properties, the novel composite product has good acoustical properties. As the components of the composite product are separate components and as the thickness of the composite product is adjustable, the insulating capacity of the product can easily be controlled.

**Claims**

1.  Insulating composite product comprising mineral wool and a material with superior insulating property (6), wherein the insulating composite product is in the form of a slab, the mineral wool forms a cell structure, said cell structure (3) comprises a bottom (4), a top (5) and four outer side edges (1), and the material with superior insulating property (6) is aerogel which is located within said cell structure of the mineral wool, whereby said material with said superior insulating property (6) is obtained by pouring aerogel granules in said cell structure, **characterized in that** the cell structure comprises two or more cells (3), which are separated from each other by partition(s) (2), said partitions being formed from said mineral wool.

2.  Insulating composite product according to claim 1, wherein the cell structure (3) comprises four cells.

3.  Insulating composite product according to claim 1, wherein the cell structure (3) comprises eight cells.

4.  Insulating composite product according to any of the preceding claims, wherein the material with superior insulating property (6) has a thermal conductivity of 0.025 W/ (m·K) or less.

5.  Insulating composite product according to any of the preceding claims, wherein the cell structure (3) is formed from stone wool.

**Patentansprüche**

1. Isolierendes Verbundprodukt, das Mineralwolle und ein Material mit überragender Isoliereigenschaft (6) umfasst, wobei das isolierende Verbundprodukt in der Form einer Platte ist, die Mineralwolle bildet eine Zellstruktur, die Zellstruktur (3) umfasst einen Boden (4), ein Oberteil (5) und vier äußere Seitenkanten (1), und das Material mit überragender Isoliereigenschaft (6) ist Aerogel, das sich innerhalb der Zellstruktur der Mineralwolle befindet, wobei das Material mit überragender Isoliereigenschaft (6) durch Gießen von Aerogelgranulat in die Zellstruktur erhalten wird, **dadurch gekennzeichnet, dass** die Zellstruktur zwei oder mehr Zellen (3) umfasst, die voneinander durch Trennwände (2) getrennt sind, welche aus Mineralwolle gebildet sind.

2. Isolierendes Verbundprodukt nach Anspruch 1, wobei die Zellstruktur (3) vier Zellen umfasst.

3. Isolierendes Verbundprodukt nach Anspruch 1, wobei die Zellstruktur (3) acht Zellen umfasst.

4. Isolierendes Verbundprodukt nach einem der vorherigen Ansprüche, wobei das Material mit überragender Isoliereigenschaft (6) eine Wärmeleitfähigkeit von 0,025 W/(m·K) oder weniger hat.

5. Isolierendes Verbundprodukt nach einem der vorherigen Ansprüche, wobei die Zellstruktur (3) aus Steinwolle gebildet wird.

**Revendications**

1. Produit composite isolant contenant de la laine minérale et un matériau ayant une propriété isolante supérieure (6), ce produit composite isolant ayant la forme d'une dalle, la laine minérale formant une structure cellulaire, ladite structure cellulaire (3) comprenant un fond (4), un dessus (5) et quatre bords latéraux extérieurs (1), et le matériau ayant une propriété isolante supérieure (6) étant de l'aérogel qui se trouve dans ladite structure cellulaire de la laine minérale, ledit matériau ayant une propriété isolante supérieure (6) étant obtenu en versant des granulés d'aérogel dans ladite structure cellulaire, **caractérisé en ce que** la structure cellulaire comprend deux cellules ou plus (3) qui sont séparées l'une de l'autre par une ou des cloisons (2), lesdits cloisons étant formées de ladite laine minérale.

2. Produit composite isolant selon la revendication 1, dans lequel la structure cellulaire (3) comprend quatre cellules.

3. Produit composite isolant selon la revendication 1, dans lequel la structure cellulaire (3) comprend huit cellules.

4. Produit composite isolant selon l'une quelconque des revendications précédentes, dans lequel le matériau ayant une propriété isolante supérieure (6) a une conductivité thermique de 0,025 W/(m.K) ou moins.

5. Produit composite isolant selon l'une quelconque des revendications précédentes, dans lequel la structure cellulaire (3) est formée de laine minérale.

Fig 1.

Fig. 2

Fig. 2a

Fig. 2b

Fig. 3a

Fig. 3b

**REFERENCES CITED IN THE DESCRIPTION**

**Patent documents cited in the description**

- US 6316092 B
- US 20060125158 A
- US 6143400 A
- US 5786059 A
- US 2893962 A
- US 7078359 B
- US 2007173157 A
- EP 1707349 A2
- EP 0022581 A1